# EUROPÄISCHE PATENTSCHRIFT

(11) **EP 1 508 493 B1**
(45) Veröffentlichungstag und Bekanntmachung des Hinweises auf die Patenterteilung: **18.04.2007**
(21) Anmeldenummer: 04103635.1
(22) Anmeldetag: 28.07.2004
(51) Int. Cl.: B62D 5/00, B62D 6/00, B62D 15/02

(54) **Lenksystem für ein Kraftfahrzeug mit einer Servolenkung**
Steering system for a vehicle with power steering
Système de direction pour un véhicule avec direction assistée

(30) Priorität: 16.08.2003 DE 10337635
(43) Veröffentlichungstag der Anmeldung: 23.02.2005
(73) Patentinhaber: Bayerische Motoren Werke Aktiengesellschaft, 80809 München (DE)
(72) Erfinder: Fleck, Reidar, 80995 München (DE); Pauly, Axel, Dr., 85757 Karlsfeld (DE)

(56) Entgegenhaltungen:
- DE-A1- 10 032 340
- DE-A1- 10 152 704
- DE-A1- 10 160 716
- US-A- 5 267 627

## Beschreibung

Die Erfindung betrifft ein Lenksystem für ein Kraftfahrzeug nach dem Oberbegriff des Patentanspruchs 1 und geht aus von der DE 100 32 340 A1.

Üblicherweise werden an Kraftfahrzeugen die für die Querdynamik wichtigen Reifenseitenkräfte an der Fzg.-Vorderachse mit Hilfe der Lenkung durch den Fahrer kontrolliert, wobei ihm als wichtigste Einflussnahme die Querführung und Stabilisierung des Fahrzeugs ermöglicht wird. Daher stellt das Lenksystem eine der wichtigsten Schnittstellen zwischen dem Fahrzeug einerseits und dem Fzg.-Fahrer andererseits dar. Dabei sei darauf hingewiesen, dass für die vorliegende Erfindung, die eine Vorrichtung zur Lenkung eines Fahrzeuges mit einer vom Fahrer bedienbaren Lenkhandhabe und einem sog. Lenkkraftverstärker betrifft, wobei die Lenkhandhabe über den Lenkkraftverstärker auf den Lenkwinkel mindestens eines lenkbaren Rades des Fahrzeuges einwirken kann, für den allgemeinen Begriff des Lenkkraftverstärkers der gängigere Begriff "Servolenkung" verwendet wird. Diese Begriffwahl soll jedoch keine Einschränkung auf gängige Servosysteme darstellen. In gleicher Weise ist der Begriff der Lenkhandhabe allgemein zu verstehen, wenngleich es sich hierbei üblicherweise um ein Lenkrad handeln dürfte. Üblicherweise ist dieses Lenkrad über eine Lenkspindel mechanisch mit dem genannten Lenkgetriebe verbunden.

Die Aufgaben des Fahrers, die er mit Hilfe eines Lenksystems erledigt, bestehen nicht nur aus der Bestimmung der Bahn des Fahrzeugs, sondern es kann auch das Ausregeln von Störungen sowie eine Stabilisierung des Fahrzeugs bei extremen Fahrzuständen erfolgen. Dabei wird grundsätzlich angestrebt, auf diejenigen Möglichkeiten zurückzugreifen, die die Fortschritte auf dem Gebiet der Elektronik und Mechatronik ermöglichen, um sowohl den Fahrer zu entlasten als auch die Leistung des Gesamtsystems Fahrer-Fahrzeug zu verbessern. Aus diesem Grunde wird zunehmend Entwicklungsarbeit auf dem Gebiet der sog. aktiven Lenkungen betrieben.

Neben Servolenkungen sind elektronisch geregelte Überlagerungslenkungen bekannt (vgl. bspw. die eingangs genannte Schrift), die dadurch charakterisiert sind, dass zu einem vom Fahrer eingegebenen Lenkwinkel bei Bedarf ein weiterer Winkel durch einen Aktuator bzw. einen sog. Lenkwinkel-Motor überlagert werden kann, woraus ein Summen-Lenkwinkel gebildet wird. Der Zusatz-Lenkwinkel, der gleichsinnig oder gegensinnig zum Fahrer-Lenkwinkel sein kann, wird durch einen Prozessor bzw. Lenkwinkel-Regler berechnet und kann dabei vom Fahrer-Lenkwinkel und diversen fahrdynamischen Größen des Kraftfahrzeugs abhängen. Eine elektronisch geregelte Überlagerungslenkung ermöglicht somit eine Anpassung des Radeinschlagwinkels bzw. Lenkwinkels am lenkbaren Rad an die jeweilige Fahrsituation und dient zur Erhöhung von Komfort, Agilität und Stabilität des Fahrzeugs. Störgrößen können kompensiert werden und es kann das Verhältnis zwischen dem Lenkrad-Lenkwinkel und dem Radeinschlagwinkel als Funktion der Fzg.-Fahrgeschwindigkeit und des Lenkradwinkels dargestellt werden.

Vorteilhafterweise bleibt eine direkte mechanische Verbindung zwischen dem Lenkrad (bzw. der Lenkhandhabe des Fahrers) und den lenkbaren Fahrzeug-Rädern bei einer üblichen Überlagerungslenkung fortwährend bestehen, so dass bei Systemausfall die herkömmliche, manuelle Lenkfunktion als Rückfallebene erhalten bleibt. Eine weitere, in der Regel positiv bewertete Eigenschaft der mechanischen Verbindung ist die direkte Übertragung des an den Rädern wirkenden Rückstellmomentes zum Lenkrad. Der Aufwand für die Erzeugung eines künstlichen Rückstellmomentes, wie bei Systemen ohne eine solche mechanische Verbindung, ist nicht erforderlich. Dieser Aspekt beeinflusst das Systemgewicht und den Energieverbrauch in vorteilhafter Weise. Als Aktuatoren bzw. Lenkwinkel-Motore zur Überlagerung kommen elektrische oder hydraulische Ausführungen in Frage. Besonders vorteilhaft sind elektromechanische Aktuatoren mit selbsthemmendem mechanischen Getriebe, da hier bei Fehlfunktion durch einfaches Abschalten des Motors die sog. manuelle Rückfallebene, d.h. die mechanische Verbindung zwischen Lenkgeber und Lenkgetriebe in Alleinwirkung aktiviert wird.

Bekannt sind weiterhin die sog. steer-by-wire-Systeme. Hierbei handelt es sich um Lenkungen in Kraftfahrzeugen, bei denen die bislang übliche mechanische Lenkspindel oder Lenksäule durchtrennt ist und der Fahrer-wunsch von der Lenkhandhabe zum sog. Lenkungsaktuator (d.h. bspw. einem Lenkgetriebe) mittels bspw. elektrischer und/oder hydraulischer Leitungen oder mit Seilzügen übertragen wird. Da bei diesem bekannten Lenksystem keine mechanische Übertragung des Rückstellmomentes der lenkbaren Räder an die Lenkhandhabe vorhanden ist, kann vorteilhafterweise die Gestaltung des Lenkradmomentes ebenfalls frei erfolgen. Dies wird allerdings mit der Notwendigkeit erkauft, einen Lenkmomentensimulator mit der dazugehörenden Regelung und Leistungsversorgung vorzusehen. Durch die umgesetzte Auftrennung der bisherigen mechanischen Lenksäule kann die vom Fahrer aufgebrachte Leistung bzw. Arbeit nicht mehr für einen Lenkeinschlag der Fzg.-Räder genutzt werden, sondern es muss sogar ein Gegenmoment am Lenkrad erzeugt werden. Dadurch steigt der Leistungsbedarf eines derartigen Systems gegenüber Lenksystemen mit manuellem Lenkanteil.

Steer-by-wire-Systeme haben ferner den Nachteil, dass der Sicherheitsaufwand aufgrund des nicht mehr vorhanden mechanischen Durchtriebs der Lenkspindel oder Lenksäule (von der Lenkhandhabe zum Lenkgetriebe) sehr hoch ist. In der Regel sind daher alle Aktuatoren bzw. Motoren und auch die Übertragung des Fahrerwunsches vom Lenkrad zu den lenkbaren Rädern mindestens einfach redundant auszulegen.

Wegen der geschilderten Nachteile der steer-by-wire-Systeme ist grundsätzlich ein Lenksystem nach dem Oberbegriff des Anspruchs 1, wie es bspw. aus der DE 100 32 340 A1 bekannt ist, vorzuziehen. Jedoch ermöglichtet dieses bislang weniger Funktionalitäten als die (dargestellten) steer-by-wire-Systeme.

Hiermit soll nun ein verbessertes Lenksystem nach dem Oberbegriff des Anspruchs 1 aufgezeigt werden, das praktisch sämtliche Vorteile der reinen steer-by-wire Systeme bereitstellen kann (= Aufgabe der vorliegenden Erfindung).

Diese Aufgabe wird durch die kennzeichnenden Merkmale des Anspruchs 1 gelöst; vorteilhafte Aus- und Weiterbildungen sind Inhalt der Unteransprüche.

Wie bereits ausgeführt wurde, ist es Stand der Technik, dass mit Hilfe einer aktiven, insbesondere elektronisch geregelten Servolenkung das den Fahrer unterstützende Moment an seiner Lenkhandhabe im Betrag frei gestaltet werden kann. Ebenso ist es möglich und bekannt, mit einer sog. überlangerungslenkung den Radeinschlagwinkel (bzw. Rad-Lenkwinkel) mit Hilfe eines elektronischen Rechners, zumindest bei Bedarf, vom Lenkradwinkel zu entkoppeln. Der vorliegenden Erfindung liegt nun die Idee zu Grunde, quasi ein steer-by-wire-System mit Beibehaltung einer mechanischen Verbindung zwischen dem Lenkrad (bzw. allgemein der Lenkhandhabe des Fahrers) und den (oder dem) lenkbarem Rädern (bzw. Rad) des Fahrzeugs darzustellen. Es handelt sich hierbei um die Kombination einer Überlagerungslenkung mit einem Servo-Lenksystem und einem Handmomentensimulator, wobei die genannten einzelnen Elemente bzw. Systeme elektronisch derart geregelt werden können, dass durch das Servo-Lenksystem und durch den Handmomentensimulator am Lenkrad bzw. an der Lenkhandhabe ein beliebiges Moment eingestellt werden kann. Mit einem entsprechenden beliebigen Moment an der Lenkhandhabe ergibt sich für den Fahrer somit ein ebenso beliebiges Moment, auch Handmoment genannt, welches er aufbringen muss, wenn er seine Lenkhandhabe (Lenkrad) in eine von ihm gewünschte Position bringen bzw. in einer gewünschten Position halten will.

Insbesondere kann das vom Servo-Lenksystem und vom Handmomentensimulator einleitbare Servo-Moment nicht nur im instationären Betrieb, d.h. während der Fahrer sein Lenkrad verdreht, sondern auch in stationären Betriebszuständen, in denen der Fahrer das Lenkrad festhält, nicht nur - wie bislang üblich - unterstützend und somit praktisch in Richtung der Fahrer-Vorgabe an der Lenkhandhabe wirken, sondern es kann das Servo-Moment sowohl stationär als auch instationär für den Fahrer auch als sog. Gegenmoment spürbar und somit der Fahrer-Vorgabe an der Lenkhandhabe entgegengerichtet sein. In gewissen Betriebspunkten, auf die an späterer Stelle noch kurz eingegangen wird, kann somit nicht wie im bislang üblichen Stand der Technik ein mehr oder weniger großes, der Vorgabe des Fahrers gleichgerichtetes Unterstützungsmoment, sondern ein der Vorgabe des Fahrers entgegen gerichtetes sog. Gegenmoment in das Lenksystem eingeleitet werden. Während dann also der Fahrer sein Lenkrad bspw. nach links verdreht, wird ein Moment an das Lenkrad angelegt, welches dieses ohne Eingriff des Fahrers nach rechts verdrehen würde.

Ferner ist es möglich, ein Servo-Moment von solcher Größe und Richtung in das Lenksystem einzuleiten, dass sich für den Fahrer auch während der Einstellung eines Lenkwinkels an den lenkbaren Fahrzeug-Rädern eine praktisch momentenfreie Lenkhandhabe ergibt, was bedeutet, dass das genannte Handmoment dann den Wert "Null" besitzt. Dabei - insbesondere wenn sich die Lenkhandhabe in der Mittelstellung oder Geradeaus-Stellung befindet - verspürt der Fahrer an seiner Lenkhandhabe keinerlei Kräfte bzw. Momente, obwohl die lenkbaren Fahrzeug-Räder eingeschlagen sind bzw. werden und daraus resultierende Kräfte in das Lenksystem eingeleitet werden. Die entsprechende Kompensation erfolgt somit durch das eingeleitete Servo-Moment, wobei dieses sog. momenentenfreie Lenkrad unabhängig von irgendwelchen Störeinflüssen, wie Massenträgheit, Reibungskräften usw. dargestellt werden kann. Auf diese Weise kann also bevorzugt in einer Geradeaus-Stellung der Lenkhandhabe bzw. des Lenkrads mit dem Lenkwinkel-Überlagerungs-System eine sog. Geradeauslaufverbesserung durchgeführt werden, bspw. zur Kompensation von festgestellten Seitenwindeinflüssen oder Fahrt (mit Bremsen oder Beschleunigen) auf unterschiedlichen Reibwerten auf der rechten bzw. linken Seite des zweispurigen Fahrzeugs. Abweichungen vom vom Fahrer gewünschten Kurs, nämlich von einer Geradeausfahrt, können über eine Messung der Querbeschleunigung oder Gierrate des Fahrzeugs festgestellt und sodann durch das Lenkwinkel-Überlagerungs-System kompensiert werden, während gleichzeitig die Lenkhandhabe im wesentlichen momentenfrei gehalten wird, so dass der Fahrer von diesem entsprechenden Regeleingriff nichts verspürt.

All dies ist möglich, indem mittels des Lenkwinkel-Überlagerungssystems ein beliebiger, von der Vorgabe des Fahrers unabhängiger Lenkwinkel einstellbar ist und indem beliebige Momente in das Lenksystem einleitbar sind, wofür neben dem Servolenksystem, welches üblicherweise nur ein im Betrag variables, jedoch hinsichtlich der Richtung durch die Vorgabe des Fahrers festgelegtes Moment in das Lenksystem einleiten kann, nun zusätzlich ein Handmomentensimulator vorgesehen ist, mit dem an der Lenkhandhabe tatsächlich ein beliebiges Moment einstellbar ist. Dabei ist es sinnvoll, die Lenkwinkelüberlagerung von der Lenkhandhabe aus gesehen vor der Überlagerung des Lenkmomentes durch das Servo-Lenksystem anzuordnen, weil dadurch die Überlagerungslenkung die Momenten-Unterstützung des Servolenksystems mitnutzen kann , so dass die erforderliche Leistung des den Überlagerungswinkel einleitenden Lenkwinkel-Motors nicht größer ist als die Leistung, die der Fahrer am Lenkrad üblicherweise aufzubringen hat. Dadurch kann ein als Überlagerungslenkungs-Aktuator fungierenden sog. Lenkwinkel-Motor sehr kompakt und leicht ausgeführt werden und ist damit weitgehend unabhängig von der betreffenden Fahrzeugklasse. Außerdem ist bei dieser vorgeschlagenen Anordnung der zu überlagernde Zusatzlenkwinkel nur begrenzt durch den maximal möglichen Lenkwinkel des Lenkgetriebes. Hingegen ist der elektromotorische Handmomentensimulator direkt in der Lenksäule bzw. an der Lenkspindel, bevorzugt nahe des Lenkrades anzuordnen, so dass sich die Überlagerungslenkung zwischen dem dem Handmomentensimulator und dem bspw. hydraulischen Servo-Lenksystem befindet.

Durch die Beibehaltung der mechanischen Verbindung zwischen dem Lenkrad und den Rädern ist ein einfaches mechanisches Sicherheitskonzept erreicht, da eine permanente mechanische bzw. manuelle Rückfallebene existiert. Ein weiterer Vorteil des vorgeschlagenen Lenksystems ist es dabei, dass die vom Fahrer in das Lenksystem eingebrachte Arbeit genutzt werden kann und dadurch der Energieverbrauch gegenüber den bekannten steer-by-wire-Systemen niedriger ist. Ein wesentlicher weiter Vorteil der permanenten Verbindung zwischen der Lenkhandhabe und den zu lenkenden Fzg.-Rädern ist, dass der Fahrer ein authentisches Lenkgefühl erhalten kann, wie er es von den heutigen Fahrzeugen in der Regel gewöhnt ist. Insbesondere ist dieses Lenkgefühl auch unter Berücksichtigung von Eingriffen des Überlagerungs-Systems erzeugbar.

Mit einem erfindungsgemäßen System kann im Fall, dass der Fahrer seine Lenkhandhabe nicht festhält, durch Einleiten eines geeigneten Servo-Moments in das Lenksystem an den lenkbaren Fahrzeug-Rädern ein von einer elektronischen Steuereinheit vorgegebener Lenkwinkel eingestellt werden. Dabei kann das Lenkrad entsprechend mitgedreht oder alternativ durch den Handmomentensimulator festgehalten werden. Entsprechendes gilt im übrigen für den Fall, dass der Fahrer seine Lenkhandhabe nicht besonders stark festhält, sondern nur "locker" hält. Auch dann kann vom System gelenkt werden, wobei dann jedoch an der Lenkhandhabe ein Moment aufgebaut wird und der Fahrer quasi gezwungen wird, mitzulenken. Diese Strategie ist für eine automatische "Spurführung", bei welcher das Fahrzeug von einem geeigneten System in einer vorgegebenen Fahrspur gehalten wird, gut geeignet.

Zurückkommend auf den Fall, dass der Fahrer seine Lenkhandhabe festhält und somit vom Fahrer ein sog Handmoment an seine Lenkhandhabe angelegt wird, kann dann, wenn der Fahrer sein Lenkrad bspw. im Uhrzeigersinn verdreht hat und festhält und somit eine stationäre Kreisfahrt ausführt, bei einem erfindungsgemäßen Lenksystem als Servo-Moment in Abhängigkeit von den aktuellen Randbedingungen entweder ein ebenfalls im Uhrzeigersinn wirkendes sog. Unterstützungs-Moment an das Lenkrad angelegt werden oder ein gegen den Uhrzeigersinn wirkendes sog. Gegenmoment. Erstgenanntes kann dazu dienen, dem Fahrer rechtzeitig das Erreichen des fahrdynamischen Grenzbereichs warnend anzukündigen und somit quasi niedrige Reibwerte virtuell darzustellen, während letzteres ermöglicht, dem Fahrer bspw. zu signalisieren, dass er einen (weitaus) geringeren Lenkeinschlag vorgeben sollte, als er dies augenblicklich tut. Im ersten Fall handelt es sich also um eine sog. "Grenzbereich-Warnung", und im zweiten Fall um eine sog. "Untersteuer-Erkennung". Beim erstgenannten Fall, nämlich der Grenzbereichs-Warnung handelt es sich also um einen weiter oben bereits angedeuteten Betriebspunkt, bei dem ein der Vorgabe des Fahrers entgegen gerichtetes sog. Gegenmoment in das Lenksystem eingeleitet wird.

Ein weiterer Beispiel für die Einleitung eines Gegenmomentes ist der Fall, dass der Fahrer auf einer mehrspurigen Fahrbahn einen Fahrspurwechsel vornehmen möchte, wobei jedoch von einem geeigneten Überwachungssystem festgestellt wird, dass dies wegen eines sich in der vom Fahrer gewünschten neuen Fahrspur nähernden anderen Fahrzeugs nicht durchgeführt werden sollte. In diesem Fall kann der Fahrer also durch Anlegen eines entsprechenden Gegenmoments darauf aufmerksam gemacht werden, dass er diesen beabsichtigten Fahrspur-Wechsel unterlassen sollte. Gleichzeitig kann in einem solchen Fall mit dem Lenkwinkel-Überlagerungs-System zumindest geringfügig vom Fahrer-Wunsch abgewichen werden und damit der vom Fahrer bereits initiierte Spurwechsel zumindest geringfügig abgeschwächt werden, insbesondere wenn andernfalls eine Kollision mit dem anderen, genannten Fahrzeug droht.

Im übrigen kann mit der vorgeschlagenen Einstellung eines quasi beliebigen Handmoments an der Lenkhandhabe dem Fahrer grundsätzlich ein Eingriff des Überlagerungs-Systems signalisiert werden oder umgekehrt kann ein Eingriff der Überlagerungslenkung an der Lenkhandhabe momentenmäßig kompensiert werden. Insofern ist der erfindungsgemäße Vorschlag für eine sog. Überlagerungslenkung besonders gut geeignet. Ermöglicht wird somit eine optimale Anpassung des für den Fahrer spürbaren Lenkmomentes und somit des sog. Handmoments an die jeweilige Fahrsituation, also quasi eine vollständig variable Servowirkung, und zwar in der Weise, dass der Fahrer nicht nur in seiner Lenkvorgabe unterstützt werden kann, sondern quasi auch daran gehindert werden bzw. zumindest teilweise davon abgehalten werden kann, eine gewisse Lenkbewegung auszuführen.

Möglich ist ein entsprechender Eingriff des Systems im übrigen auch dann, wenn der Fahrer selbst überhaupt kein Lenkmoment aufbringt und somit die Lenkhandhabe bzw. das Lenkrad loslässt. Dann kann bspw. mittels eines geeigneten Systems, so bspw. durch ein Spurführungssystem, an den lenkbaren Rädern ein Lenkwinkel mittels des Überlagerungs-Systems umgesetzt werden, wobei das erforderliche Abstützmoment an der Lenkhandhabe vom Servolenksystem, insbesondere vom Handmomentensimulator erzeugt bzw. aufgebracht wird. Alternativ kann - wie bereits ausgeführt wurde - das Lenkrad aktiv gedreht bzw. die Lenkhandhabe vom Lenksystem bzw. vom Servolenksystem aktiv betätigt werden, indem ein entsprechendes Moment in das Lenksystem eingeleitet bzw. an die Lenkhandhabe angelegt wird. Erzeugt werden können somit fahrerunabhängige Lenkmomente und Radlenkwinkel, d.h. möglich ist ein automatisches Lenken bzw. eine Lenk-Assistenz, wobei vorteilhafterweise eine Mitnutzung der vom Fahrer erbrachten Lenk-Arbeit bzw. Lenk-Leistung möglich ist.

Ein erfindungsgemäßes Lenksystem bietet bezüglich Funktionalität und Kundennutzen die gleichen Möglichkeiten, wie die weiter oben als bekannter Stand der Technik beschriebenen steer-by-wire Systeme. So kann über die Überlagerungslenkung der Lenkwinkel und über die aktiv geregelte Servolenkung das sog Handmoment, d.h. das für den Fahrer an seiner Lenkhandhabe spürbare Lenkmoment unabhängig von den Vorgaben des Fahrers beliebig und insbesondere nicht nur betragsmäßig, sondern auch in der Wirkrichtung verändert werden.

## Patentansprüche

1. Lenksystem für ein Kraftfahrzeug mit einem elektronisch geregelten Servolenksystem, das einem vom Fahrzeug-Fahrer mittels seiner Lenkhandhabe erzeugten und in ein Lenkgetriebe, das eine Übersetzung zu dem oder den lenkbaren Fahrzeug-Rad oder Rädern vornimmt, über eine mechanische Verbindung in Form einer Lenkspindel eingeleiteten Moment ein im Betrag variables Servo-Moment hinzufügt, sowie mit einem Lenkwinkel-Überlagerungs-System, mit Hilfe dessen unter Beibehaltung der mechanischen Kopplung zwischen der Lenkhandhabe und dem Lenkgetriebe dem vom Fahrer vorgegebenen Lenkwinkel ein gleichsinniger oder gegensinniger Zusatz-Lenkwinkel hinzugefügt werden kann und somit an den lenkbaren Fahrzeug-Rädern ein von der Vorgabe des Fahrers unabhängiger Lenkwinkel einstellbar ist, wobei das Lenkwinkel-Überlagerungs-System zwischen der Lenkhandhabe und dem Lenkgetriebe sowie von der Lenkhandhabe aus gesehen vor dem Servolenksystem angeordnet ist,
**dadurch gekennzeichnet, dass** neben dem Servo-Lenksystem ein elektromotorischer Handmomentensimulator, der auf die Lenkhandhabe einwirkt, zu Erzeugung des Servo-Moments vorgesehen ist und dass der Handmomentensimulator von der Lenkhandhabe aus betrachtet vor dem Lenkwinkel-Überlagerungs-System im Lenksystem angeordnet ist.

2. Lenksystem nach Anspruch 1,
**dadurch gekennzeichnet, dass** als Servo-Moment nicht nur ein der Vorgabe des Fahrers gleichgerichtetes sog. Unterstützungs-Moment, sondern auch ein der Vorgabe des Fahrers entgegengerichtetes Gegenmoment in das Lenksystem einleitbar ist.

3. Lenksystem nach Anspruch 1 oder 2,
**dadurch gekennzeichnet, dass** eine für den Fahrer momentenfreie Lenkhandhabe auch während der Einstellung eines Lenkwinkels an den lenkbaren Rädern darstellbar ist.

4. Lenksystem nach einem der vorangegangenen Ansprüche,
**dadurch gekennzeichnet, dass** für den Fall, dass der Fahrer seine Lenkhandhabe nicht festhält, durch Einleiten eines Servo-Moments an den lenkbaren Fahrzeug-Rädern ein von einer elektronischen Steuereinheit vorgegebener Lenkwinkel einstellbar ist.

5. Lenksystem nach einem der vorangegangenen Ansprüche,
**dadurch gekennzeichnet, dass** in Geradeaus-Stellung der Lenkhandhabe mit dem Lenkwinkel-Überlagerungs-System eine Geradeauslaufverbesserung durchgeführt und gleichzeitig mit dem Servolenksystem die Lenkhandhabe im wesentlichen momentenfrei gehalten wird.

## Claims

1. A steering system for a motor vehicle comprising an electronically controlled power steering system, which adds a servo torque, which is variable in amount, to a torque generated by the vehicle driver by means of his steering handle and introduced via a mechanical connection in the form of a steering spindle into a steering gear, which carries out a transmission to the steerable vehicle wheel or wheels, and also comprising a steering angle superimposition system, with the aid of which, an additional steering angle in the same direction or in the opposite direction can be added to the steering angle predetermined by the driver while retaining the mechanical coupling between the steering handle and the steering gear and thus a steering angle which is independent of the input of the driver can be adjusted at the steerable vehicle wheels, in which the steering angle superimposition system is arranged between the steering handle and the steering gear and, viewed from the steering handle, in front of the power steering system, **characterised in that**, apart from the power steering system, an electric motor manual torque simulator, which acts on the steering handle, is provided to generate the servo torque and **in that** the manual torque simulator, viewed from the steering handle, is arranged in front of the steering angle superimposition system in the steering system.

2. A steering system according to claim 1, **characterised in that** not only an assistance torque in the same direction as the input of the driver, but also a counter-torque directed counter to the input of the driver, can be introduced as a servo torque into the steering system.

3. A steering system according to claim 1 or 2, **characterised in that** a steering handle that is torque-free for the driver can be presented even during the adjustment of a steering angle at the steerable wheels.

4. A steering system according to any one of the preceding claims, **characterised in that** if the driver does not hold his steering handle, a steering angle predetermined by an electronic control unit can be adjusted by introduction of a servo torque at the steerable vehicle wheels.

5. A steering system according to any one of the preceding claims, **characterised in that**, in the straight ahead position of the steering handle, a straight ahead running improvement is carried out with the steering angle superimposition system and, simultaneously, the steering handle is kept substantially torque-free by the power steering system.

## Revendications

1. Système de direction pour un véhicule ayant un système de direction assistée à régulation électronique qui ajoute à un couple produit par le conducteur du véhicule au moyen de son élément de direction et introduit, un servo-couple de grandeur variable, au moyen d'une liaison mécanique sous la forme d'un arbre de direction, dans un mécanisme de direction qui effectue une démultiplication à la roue ou aux roues directrices du véhicule, un système de superposition des angles de direction, un angle ajoutant de direction supplémentaire de même sens ou de sens opposé à l'angle de direction prédéterminé par le conducteur tout en conservant le couplage mécanique entre l'élément de direction et le mécanisme de direction, un angle de direction indépendant de la prédétermination du conducteur étant réglable sur les roues directrices du véhicule, le système de superposition des angles de direction étant entre l'élément de direction et le mécanisme de direction et, vu de l'élément de direction, avant le système de direction assistée,
**caractérisé en ce qu'**
outre le système de direction assistée, un simulateur de couple manuel électromoteur qui agit sur l'élément de direction pour produire le servo-couple, et le simulateur de couple manuel, vu de l'élément de direction, est agencé avant le système de superposition des angles de direction dans le système de direction.

2. Système de direction selon la revendication 1,
**caractérisé en ce qu'**
on introduit comme servo-couple dans le système de direction non seulement un couple d'assistance dans le même sens que la prédétermination du conducteur, mais aussi un couple résistant dirigé dans le sens opposé à la prédétermination du conducteur.

3. Système de direction selon la revendication 1 ou 2,
**caractérisé en ce qu'**
un élément de direction sans couple pour le conducteur est possible aussi pendant le réglage d'un angle de direction sur les roues directrices.

4. Système de direction selon l'une des revendications précédentes,
**caractérisé en ce que**
si le conducteur ne maintient pas fermement son élément de direction, l'introduction d'un servo-couple permet de régler, sur les roues directrices du véhicule, un angle de direction prédéterminé par une unité de commande électronique.

5. Système de direction selon l'une des revendications précédentes,
**caractérisé en ce que**
en position rectiligne de l'élément de direction, une amélioration de la trajectoire rectiligne est effectuée avec le système de superposition des angles de direction et, en même temps, l'élément de direction est maintenu pour l'essentiel sans couple par le système de direction assistée.
